# EUROPEAN PATENT SPECIFICATION

(11) **EP 3 490 906 B1**
(45) Date of publication and mention of the grant of the patent: **03.06.2020**
(21) Application number: 17735179.8
(22) Date of filing: 11.07.2017
(51) Int. Cl.: B65D 85/804

(54) **CAPSULE AND BEVERAGE PRODUCTION SYSTEM**
KAPSEL UND GETRÄNKEHERSTELLUNGSSYSTEM
CAPSULE ET SYSTÈME DE PRODUCTION DE BOISSON

(30) Priority: 26.07.2016 EP 16181224
(43) Date of publication of application: 05.06.2019
(73) Proprietor: Société des Produits Nestlé S.A., 1800 Vevey (CH)
(72) Inventor: OZANNE, Matthieu, 74500 Publier (FR); MARTIN, Olivier, 1350 Orbe (CH)
(74) Representative: Ducreux, Marie
(86) International application number: PCT/EP2017/067364
(87) International publication number: WO 2018/019568

(56) References cited:
- WO-A1-2005/092160
- WO-A1-2008/025730
- WO-A1-2015/136433
- WO-A2-2011/144479
- US-A1- 2013 139 699

## Description

### Field of the invention

The present invention relates to the field of producing beverages or other liquid comestibles on the basis of ingredients which are contained in a capsule.

### Background of the invention

The invention relates particularly to beverage production machines comprising a module with a first capsule engagement member, which can be displaced relative to a second co-operating capsule engagement member between an opened capsule insertion position and a closed capsule-enclosure position. The module comprises means for actively retracting the capsule from the beverage production position to a capsule discharge position in which the capsule is ejected from the module. Such a machine presents the advantage of having a capsule discharge position which is offset relative to the beverage production position. This advantage is of interest when the machine and the capsule are conceived for delivering the beverage directly out of the capsule in a cup without the beverage contacting the machine since it enables the discharge of the capsule in a position which is offset relative to the vertical of the beverage flow path. Such a beverage production machine is described in EP-A1-2033551, WO 2011/144479 or WO 2015/032651.

In such a machine, the capsule is introduced in the beverage production module, is retained by pre-fixation arms in a pre-engagement position and is then engaged by a first engagement member, of which internal shape matches the capsule shape further to the movement of the first engagement member to the capsule. At the end of this movement, the capsule is clamped between the first and the second engagement members and the diluent, generally hot water, can be introduced to interact with the ingredients in the capsule. The resulting beverage flows out of the capsule either through an outlet provided in the capsule or/and produced by the machine during the capsule engagement and falls by gravity in a cup. Once beverage has been delivered, the first engagement member moves back to the capsule discharge position dragging the capsule towards a position offset relative to the vertical of the beverage flow path. The movement of the first engagement member is a combination of a linear movement and an end swivelling movement so that the capsule can fall by gravity from the first engagement member.

The module comprises means for retaining the rim of the capsule extending beyond the first capsule engagement member when the first capsule engagement member is displaced from the beverage production position to its capsule discharge position. These means consist in two tabs symmetrically positioned or slightly offset on the lateral walls of the frame of the module and able to retain the rim of the capsule.

Presently capsules used with this machine commercialised under the trademark Special-T by Nestle are made of aluminium.

It has been noticed that these capsules can be easily and irremediably deformed during storage, in particular if they are stored in bulk. Actually, since the capsules are used as brewing chambers and must enable tea leaves opening, these capsules present rather big dimensions and tea leaves are not compacted inside. Consequently, external forces exerted on the aluminium foil lead to plastic deformation of the capsule wall and to a less attractive aspect.

In order to avoid deformation, capsules are stored in specific packaging comprising trays wherein each capsule is prevented from contacting the other capsules. The solution is efficient but such packaging increases storage volume and is costly.

In order to provide non deformable capsules, it has been proposed to make capsules in plastic material. Yet it has been noticed that depending on the nature of the material the capsules are made of, different unforeseeable problems arose during beverage preparation.

First, when the capsules are made of plastic material by simply reproducing the same identical shape as the aluminium ones, it has been noticed that once used for producing a beverage, the extracted capsules are deformed and do not present their original shape any longer. Precisely the lateral rounded sides of the capsule originally convex before use, become concave after extraction as if the capsule had been internally sucked. This change of shape can have a bad impact on the feeling of the user about the quality of the final beverage, specifically raising questions about a potential reaction between the plastic material and hot water, though there is no issue. This deformation happens during extraction and it was unexpected to face such a deformation by simply changing the nature of the material the capsule is made of.

It was also noticed that, when the capsules are fully made of plastic material, it becomes difficult for the user to manually actuate the machine. Indeed in this machine, the movement of capsule engagement members is due to the manual actuation of a lever by the user. The manual handling is more difficult with a capsule in plastic because, when the user initiates the mechanical movement of the capsule engagement members, the piercing of the back side of the plastic capsule requires a stronger force and is perceived as a difficult movement. Finally the ergonomic feeling is not pleasant.

An object of the present invention is to provide plastic capsules for the above machines that do not deform under the hot water extraction.

It would be advantageous to provide plastic capsules for the above machines that provide a pleasant ergonomic feeling during manual actuation of the machine.

### Summary of the invention

In a first aspect of the invention, there is provided a capsule containing beverage ingredient, such as tea leaves, configured for preparing a beverage, such as tea, by injection of hot water therein and comprising :
- a housing for storing said beverage ingredient, said housing comprising :
   - a front opened side,
   - a back side comprising a water injection area, said water injection area comprising a hole in the housing,
   - a rim extending from the front opened side/face, and
- a front cover and/or a wall closing the front opened side of the housing, and
- a back cover closing the hole of the water injection area, and
   the housing presenting a cross section varying from the back side to the front side from a circular section to a globally triangular section - with smooth rounded corners - respectively, and
   wherein :
   - the housing is made of plastic material, and
   - the back side of the housing comprises a hollow around the water injection area, said hollow extending inside the internal volume of the housing and said hollow extending at least along an annular portion surrounding the hole of the water injection area.

The capsule is configured for preparing a beverage, preferably tea, by injection of hot water therein. Water is injected through the water injection area so as to fill the housing and brew beverage ingredient within the capsule. The resulting beverage is dispensed through the front side, preferably through an opening pierced in the front wall and/or cover, during the process of preparation.

The housing of the capsule is a container presenting a cross section shape varying between a circular and a triangular profile with smooth rounded corners. Preferably the triangular profile is isosceles and the two equal sides are longer than the third side.

Generally the water injection area is a plane surface.

Capsules presenting such a shape are commercialised under the trademark Special-T by Nestle. The housing of these commercialised capsules is made of aluminium.

The capsule contains at least one beverage ingredient. The beverage ingredients can be for example selected in the following list: tea leaves, herbal or fruit tea leaves, roast and ground coffee, soluble beverage ingredients, ... It is preferably tea or herbal or fruit tea leaves.

In the present capsule, the housing is made of plastic material. In particular, this plastic material is able to be shaped by thermoforming or injection moulding. It is usually a thermoplastic or thermosetting polymer. It is food agreed due to its use for preparing a beverage, like polypropylene (PP).

If made by thermoforming, which is the preferred embodiment, this material can be selected in the list of PP (polypropylene) based layers material, in particular PP-EVOH-PP layered materials (EVOH meaning ethylene vinyl alcohol). The different layers can comprise regrind plastic material layers, binding material layers and/or colouring material layers too.

The present invention particularly applies to plastic capsules wherein the plastic material of the housing is deformed if it is heated and simultaneously submitted to a compression force, that is to say the plastic material can be deformed by buckling.

The housing is shaped so as to comprise a hollow or a groove on its external surface.

This hollow surrounds the water injection area at the back face of the housing.

In one dimension this hollow extends within the internal volume of the housing.

In another dimension, this hollow extends at least along an annular portion surrounding the hole of the water injection area.

According to the preferred mode, the hollow can present the shape of a ring surrounding the hole of the water injection area.

According to an alternative mode, the hollow can present the shape of a circle comprising the hole of the water injection area.

According to a less preferred mode, the hollow can present any shape (oval, square, ...) as long as said hollow extends at least along an annular portion surrounding the hole of the water injection area.

According to one preferred embodiment, the housing presents :
- a largest height comprised between 47,9 and 48,5 mm, and preferably of about 48,18 mm, and
- a largest width comprised between 36,7 and 37,3 mm, and preferably of about 37 mm, and
- a largest depth comprised between 24,1 and 24,3 mmm and preferably of about 24,43 mm.

Preferably, with the above preferred dimensions, the annular portion surrounding the hole of the water injection area and along which the hollow extends presents an internal diameter of 10 mm and an external diameter of 14 mm.

This hollow extending at least along the annular portion surrounding the hole of the water injection area is sufficient to avoid the deformation of the shape of the housing made in plastic further to the introduction of hot water (generally of at least 70 °C) in the housing by means of a machine of the type commercialised under the trademark Special-T by Nestle.

As mentioned above, in the preferred mode, the hollow presents the shape of an annular portion or ring surrounding the hole of the water injection area.

As the groove usually extends from the external surface of the housing inside the internal volume of the housing, the volume of the groove slightly impedes the internal volume of the housing compared to a groove in form of a circle (which is an alternative mode). Indeed keeping the internal volume of the housing as large as possible is critical for maintaining an optimal brewing of tea leaves inside the capsule. Yet, with the above preferred dimensions of the housing, providing a circle with a diameter of 14 mm at the back side of the housing impacts the internal volume of the capsule by a decrease of more than 6 % compared to the existing capsules made of aluminium. Accordingly a hollow in shape of an annular portion or ring is preferred in order to keep the internal volume as large as possible.

Generally, at least along the annular portion surrounding the hole of the water injection area, the depth of the hollow is of at least 0,7 mm, and is preferably of about 0,9 mm.

The water injection area at the back side of the housing comprises a hole in the housing. The back side presents usually one single hole. This hole is configured for receiving a water injection needle when the capsule is used in a beverage preparation machine.

This hole is covered by a back cover. The back cover is preferably attached at the inside of the housing. Generally this back cover is pierceable by a needle. It is preferably made of aluminium. AlOx coated PET films can also be used or any other food agreed pierceable cover.

Preferably a part of the water injection area around the hole is flat. Accordingly the back cover can be more efficiently attached to the housing to close the hole.

Generally the hole at the back side of the housing presents the shape of a circle.

Usually the hole presents a diameter of at least 4 mm, preferably of at least 5 mm, even more preferably superior or equal to 6 mm.

Accordingly, when the capsule is pierced by the needle of a beverage preparation machine, the piercing movement is soft for the operator and there is no risk that the needle slides in an inappropriate manner against the edge of the hole at the back side of the housing and its movement being hampered by the plastic wall of the capsule. It is the same when the needle is retracted from the capsule during the ejection step. Even if the capsule is not perfectly immobile at the times when the needle moves in and out of the hole, the dimension of the hole guarantees that the needle does not interact with the plastic wall of the capsule, impinging the soft movement of the capsule in the machine. Specifically this hole is sufficient to avoid any problem in the movement of the plastic capsule within a machine of the type commercialised under the trademark Special-T by Nestle.

Usually the housing of the capsule is manufactured by thermoforming and then punching of the hole at the back side.

Preferably the housing of the capsule is made by a process of thermoforming starting from a plastic sheet comprises the steps of :
- heating the plastic sheet to a pliable forming temperature,
- forming several housings to the desired shape in the plastic sheet, and
- trimming the housing(s).

The hole at the back side is usually formed by punching the back side of the housing in a further step. Punching the back side of the capsule with precision is not always possible and, although it is desired to position the hole very accurately at the centre of the back side of the housing, it frequently happens that the hole is not centred. Actually the tolerance for the position of the hole resulting from the punching is of about +/- 0,2 mm. The consequence of this bad centring of the hole at the back side of the capsule is that the risk the back hole is not well positioned relatively to the water needle in the beverage production module during beverage production and impinges the movement of the water needle is increased. Yet the plastic capsule such as defined above limits this risk. In particular the dimension of the back hole guarantees that a capsule produced with the worst tolerance remains well handled in the beverage production module.

In an alternative way, the housing can be produced by injection moulding. In that case the hole in the back can be produced during moulding and the bad centring of the hole is not an issue.

In the following step of manufacture, the back side cover is attached to the back side of the housing in order to close the back side hole. Preferably this cover is attached to the internal surface of the housing surrounding the hole. Attachment can be made with glue, by ultrasound welding or by thermosealing. In order to get a good attachment it is preferred that the edge of the cover is strongly attached to the housing around the hole. For this reason, the dimension of the hole shall be set so that the cover can be attached on a rather flat area. Generally an area presenting a width of at least 2 mm is preferred. Accordingly, the hole at the back side of the housing at the back side of the housing can present a diameter of at most 12 mm, preferably at most 11 mm, even more preferably of at most 10 mm.

In the following step of manufacture, the housing can be filled with beverage ingredient before closing the front side with a cover and/or a wall such as described hereunder.

The capsule can comprise a wall at the font opened side of the housing. This wall can provide a function of guiding the beverage out of the capsule and/or a function of facilitating opening of a beverage outlet from the capsule and/or an identification function. Whatever the function, the wall always comprises an opening providing an outlet path for beverage prepared in the capsule. The opening can be through the wall or can result from the use of a partially truncated wall.

The capsule can comprise a wall at the front side of the housing, said wall comprising at least one beverage overflow hole.

Preferably a filter is attached to said wall so that the filter covers the at least at least one beverage overflow hole.

Preferably the filter is attached to the side of the wall facing the internal enclosure of the housing.

In a particular embodiment, such a wall can be designed according to the teaching of WO 2007/042414.

Accordingly, when the capsule comprises tea leaves, a tea beverage of optimised quality and deprived of tea leaves fines is produced.

The capsule can comprise a wall at the front side of the housing, said wall comprising an identification member on its outside face, said identification member being designed for being physically contacted.

Such a wall comprising an identification member can be designed according to the teaching of EP-A-1 950 150.

Accordingly, information about the optimal preparation of the beverage from the beverage ingredient can be coded through the identification member.

The capsule can comprise a wall at the front side of the housing, said wall comprising at least one beverage overflow hole and an identification member on its outside face. Preferably a filter is attached to said wall so that the filter covers the at least at least one beverage overflow hole.

Preferably the capsule comprises a front cover, said front cover closing the front side of the housing. Usually the front cover is a plane cover. At least a part of the front cover is preferably pierceable or tearable.

Preferably the front cover is made of:
- a monolayer membrane like aluminium, or
- a multilayer membrane like laminates of PET/aluminium/PP (PET = polyethylene terephthalate), PE/EVOH/PP, PET/metallised/PP, aluminium/PP, laminates of paper.

The front cover guarantees the freshness and the hygiene of beverage ingredient stored in the capsule. The front cover is usually food agreed.

The front cover guarantees the freshness and the hygiene of beverage ingredient stored in the capsule.

According to the preferred embodiment, the capsule comprises a wall at the front side of the housing and a cover closing the front side of the housing above the wall.

In said embodiment, preferably the wall comprises a shearing member on its outside face, said shearing member being designed to tear the cover when the capsule is clamped in the beverage preparation machine.

Accordingly a beverage outlet can be made in the cover when the capsule is clamped in the machine.

The capsule of the present invention usually presents a rim extending from the edge of the front side. Preferably the rim presents a flat surface. Preferably a cover is fixed on this rim. Preferably the capsule comprises an identification member such as described above under the cover.

Preferably the capsule comprises a filter under the cover.

Preferably the capsule comprises an overflow wall under the cover.

Preferably the capsule is configured for preparing and dispensing a beverage with the front side positioned vertically within a beverage preparation machine.

According to a **second aspect,** there is provided a beverage production system comprising a capsule such as described above and a module for producing a beverage from the capsule,
- the module comprising :
   - a first capsule engagement member, which can be displaced relative to a second, co-operating capsule engagement member between a capsule discharge position and a beverage production position,
   - a means for actively retracting the first capsule engagement member from the beverage production position to the capsule discharge position in which the capsule is discharged from the first capsule engagement member,
- the displaceable first capsule engagement member comprising :
   - a capsule receptacle, said capsule receptacle shape matching at least a part of the outer shape of the housing of the capsule, and
   - a water needle for entering the capsule through the hole at the back side of the capsule housing and injecting water in the capsule, and
   - a seal at the basis of the water needle, said seal comprising at least one annular part, said at least annular part matching at least the shape of the annular portion of the hollow surrounding the hole of the water injection area of the capsule.

The module for producing a beverage of the system can present the features of the module described in EP-A1-2 033 551. It comprises two co-operating capsule engagement members, the first member being displaceable between a closed position in which the capsule is engaged between the two members and called the beverage production position and an open position in which no capsule is engaged by the members and called the capsule discharge position.

When the first member is in the beverage production position, a beverage can be extracted from the capsule and dispensed in a drinking container.

The capsule discharge position is distinct from the beverage production position. Accordingly the capsule discharge position is offset relative to the beverage production position that is to the vertical of the beverage flow path.

The displaceable first capsule engagement member comprises a capsule receptacle. The internal surface of the receptacle matches at least a part of the outer shape of the housing of the capsule meaning that the capsule receptacle presents a cross section varying from the back side to the front side from a circular section to an essentially triangular section - with smooth rounded corners - respectively, as for the capsule. Preferably the internal surface of the receptacle matches at least the outer shape of the back part of the housing of the capsule.

This receptacle presents a sidewall and a mouth that delimit with the second capsule engagement member at least part of a brewing chamber for containing the capsule.

The module comprises means for displacing the first capsule engagement member between the two positions. It is preferably a handle. For example a handle such as described in WO 2015/032651 or WO 2007/134960.

The module is designed for injecting water into the capsule and having beverage drained from the capsule while the capsule is in the beverage production position.

Preferably the second engagement member is a front wall against which the first member can push the capsule. Once pushed against the front wall, an outlet can be opened in the capsule so that beverage can flow from said outlet and flows along the front wall in a drinking container.

Accordingly the module, preferably the second capsule engagement member, can comprise an opening means for entering and generally piercing the capsule and producing a beverage outlet in the capsule. The opening means can be a puncher as described in WO 2010/146101. This opening means is generally placed adjacent to the second capsule engagement member or can even be part of this second capsule engagement member. According to another embodiment the capsule can present an opened beverage outlet before being introduced in the module.

In the preferred embodiment, the second engagement member is essentially positioned to the vertical of the beverage flow path.

The displaceable first capsule engagement member comprises a water needle for entering the hole of the water injection area and piercing the cover covering said hole, and injecting water in the capsule. This needle protrudes from the internal surface of the first capsule engagement member.

The needle presents a seal at its basis protruding from said surface. The seal aims to avoid water or beverage leaking from the hole pierced in the water injection area of the capsule upstream to the internal parts of the machine.

This seal is generally made of a flexible and resilient material like an elastomer. It can be made of silicone rubber.

This seal comprises at least one annular ring. This annular ring is generally centred on the basis of the needle. This annular ring of the seal matches at least the shape of the annular portion of the hollow surrounding the hole of the water injection area in the capsule.

During the displacement of the first capsule engagement member to the beverage production position, the first capsule engagement member surrounds the capsule, the needle pierces the cover at the water injection area of the capsule and protrudes inside the capsule. Simultaneously the annular seal at the basis of the needle cooperates with the hollow at the back side of the housing of the capsule :_due to the hollow in the capsule, the annular seal of the needle enters in this hollow.

In this position, hot water can be introduced through the needle in the plastic capsule to brew the beverage ingredient. Once the capsule is further extracted from the machine, the plastic capsule presents the same shape as when it was introduced in the machine before beverage preparation, although hot water has been injected inside.

According to one particular embodiment of the above system :
- the capsule comprises a back hole presenting a diameter of at least 4 mm, preferably of at least 5 mm, even more preferably superior or equal to 6 mm,
- the capsule presents a rim size such that at least a part of the rim of the capsule extends beyond at least a part of the first capsule engagement member once it is engaged in the first capsule engagement member, and
- the displaceable first capsule engagement member comprises holding means configured for holding the capsule within the capsule receptacle,
- the module comprises at least two means for retaining the rim of the capsule extending beyond the first capsule engagement member when said first capsule engagement member is displaced from the beverage production position to its capsule discharge position, wherein said holding means are discrete hooks configured to engage with the rim of the capsule, and
wherein said two means for retaining the rim of the capsule are configured so that, during the displacement of the first capsule engagement member from the beverage production position to its capsule discharge position, one of the two retaining means engages the rim of the capsule before the other retaining means.

The displaceable first capsule engagement member comprises holding means configured for holding the capsule within the capsule receptacle. These holding means aim to holding the capsule inside the capsule receptacle when the first capsule engagement member is actively retracted from the beverage production position to the capsule discharge position. These holding means guarantee that the capsule does not remain stick to the second engagement member while the first engagement member is retracted. These holding means are discrete hooks configured to engage with the rim of the capsule.

Preferably the displaceable first capsule engagement member comprises two hooks configured to engage with the rim of the capsule, said hooks being positioned on the lateral sides of the front face of the capsule receptacle. Preferably these two hooks are positioned on the lateral sides of the front face of the capsule receptacle.

The hooks and the first capsule engagement member can be made of the same plastic material so that the hooks can be moulded as one single piece with that first capsule engagement member.

According to one preferred embodiment, each hook is an arm extending from a lateral side of the front face of the capsule receptacle, said arm presenting a slanted end and comprising a vertical slit. The slanted end enables each hook to engage progressively with the rim of the capsule when the first capsule engagement member moves to the capsule to surround it and press it against the second engagement member. The rim of the capsule slides along the slanted end and is led to the vertical slit configured to hold said rim.

According to said particular embodiment of the system, the two means for retaining the rim of the capsule are configured so that, during the displacement of the first capsule engagement member from the beverage production position to its capsule discharge position, one of the two retaining means engages the rim of the capsule before the other retaining mean engages the capsule rim.

Accordingly the capsule is disengaged from the first capsule engagement member in two short close steps :
- first, one lateral rim of the capsule is engaged by the first retaining means. This first retaining means hold the rim of the capsule and removes the rim of the capsule from the first hook of the first capsule engagement member,
- secondly, the other lateral rim of the capsule is engaged by the second retaining means. This second retaining means hold the rim of the capsule and removes the rim of the capsule from the second hook of the first capsule engagement member.

Consequently the removal of the rim of the capsule from the two hooks is split in two steps. As the forces necessary for removing the rim successively from each hook are inferior to the force necessary for removing the rim simultaneously from both hooks, the capsule can be removed from the member having the shape of a hollow bell with less force. Consequently there is no risk that the capsule is thrown out of the first capsule engagement member horizontally in direction of the front of the module and remains blocked in the machine in place of simply dragging down in the capsule bin, preventing the introduction of any new capsule within the module.

Then the capsule is retained through its rim by both retaining means while the first engagement member finishes the course of its movement. At the end of this movement the first engagement member fully releases the capsule from the capsule receptacle and the capsule is free to fall downwards, preferably in a capsule collecting bin.

Preferably one retaining means is positioned on each lateral side of the longitudinal axis of displacement of the first capsule engagement member and the positions of the two retaining means along said longitudinal axis of displacement are offset one relative to the other. Generally the positions of the two retaining means along the longitudinal axis of the frame of the module are offset one relative to the other by at least 1 mm, preferably, at most 5 mm, even more preferably between 3 and 4 mm.

Preferably tabs are positioned in the lateral walls of the module so as to engage a part of the rim of the capsule, said part being close to the portion of the rim engaged with one of the hooks.

During the movement of removal of the capsule from the first capsule engagement member, due to the successive engagements of the capsule rim with the first retaining means and then the second retaining means, the capsule becomes laterally tilted. During this step and this change of orientation, the water needle extending through the hole at the back side of the housing is not aligned with the axis of said hole any longer. Yet, with the capsule such as described above, the dimension of the hole is such that the needle is prevented from rubbing against the edge of the hole during this misalignment of the capsule with the needle.

According to a **third aspect,** there is provided the use of a capsule such as described above in a beverage production system such as described above wherein :
- the water needle enters the hole comprised in the water injection area at the back side of the capsule housing, and
- the annular part of the seal at the basis of the water needle cooperates with the hollow surrounding the hole of the water injection area of the capsule.

According to a **fourth aspect,** there is provided a beverage production system comprising :
- a module for producing a beverage from a capsule comprising :
   - a first capsule engagement member, which can be displaced relative to a second, co-operating capsule engagement member between a capsule discharge position and a beverage production position,
   - a means for actively retracting the first capsule engagement member from the beverage production position to the capsule discharge position in which the capsule is discharged from the first capsule engagement member,
   - the displaceable first capsule engagement member comprising :
      - a capsule receptacle, said capsule receptacle shape matching at least a part of the outer shape of the housing of the capsule, and
      - a water needle for entering the capsule through the hole at the back side of the capsule housing and injecting water in the capsule, and
      - a seal at the basis of the water needle, said seal comprising at least one annular part, said at least annular part matching at least the shape of the annular portion of the hollow surrounding the hole of the water injection area of the capsule,
         and
- a capsule containing beverage ingredient, such as tea leaves, configured for preparing a beverage, such as tea, by injection of hot water therein and comprising :
   - a housing for storing said beverage ingredient, said housing comprising :
      - a front opened side,
      - a back side comprising a water injection area, said water injection area comprising a hole in the housing,
      - a rim extending from the front opened side, and
   - a front cover and/or a wall closing the front opened side of the housing, and
   - a back cover closing the hole of the water injection area, and
   - the housing presenting a cross section varying from the back side to the front side from a circular section to a globally triangular section - with smooth rounded corners - respectively, and
      wherein :
      - the housing is made of plastic material, and
      - the back side of the housing is designed so that it is not squeezed against the seal at the basis of the water needle when the capsule is housed in the capsule receptacle and the first capsule engagement member is in the beverage production position.

According to one embodiment, in such a system, the back side of the housing can be flat and the depth of the housing of the capsule can be dimensioned to avoid that the seal is squeezed against the back side of the capsule.

According to **a fifth aspect,** there is provided a housing of a capsule for holding beverage ingredient, said housing comprising :
- a front opened side,
- a back side comprising a water injection area, said water injection area comprising a hole in the housing,
- a rim extending from the front opened side, and
- the housing presenting a cross section varying from the back side to the front side from a circular section to a globally triangular section - with smooth rounded corners - respectively, and
wherein :
- the housing is made of plastic material, and
- the back side of the housing comprises a hollow around the water injection area, said hollow extending inside the internal volume of the housing and said hollow extending at least along an annular portion surrounding the hole of the water injection area.

A back cover can close the hole of the water injection area.

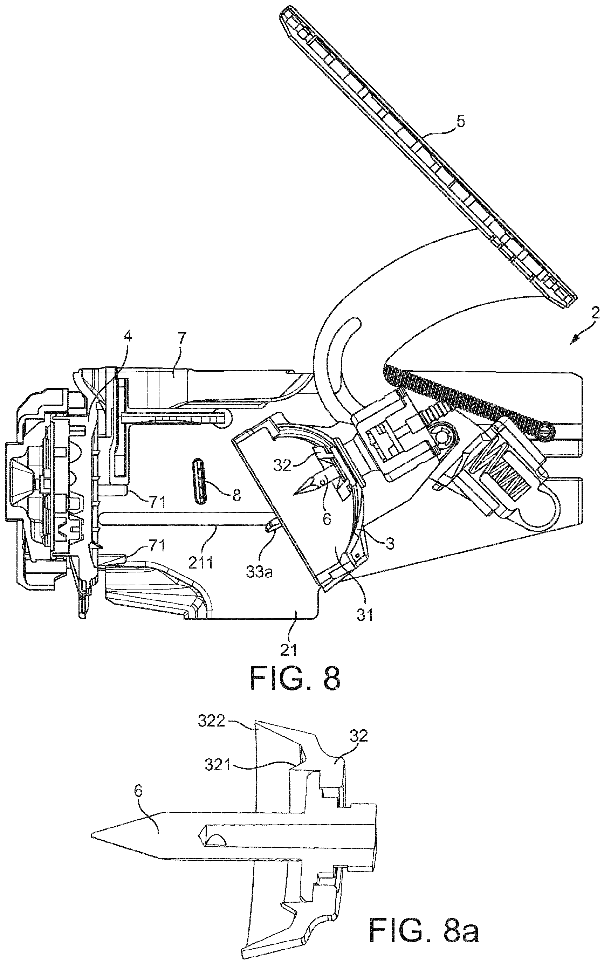

In the present application the terms "internal", "external", "back", "front", "bottom" and "lateral" are used to describe the relational positioning of features of the invention. These terms should be understood to refer to the capsule in its normal orientation when positioned in the module for producing a beverage or to the module in its normal orientation when used for producing a beverage as shown in the figures 8, 9, 12a to 12f, 13a to 13c.

### Brief description of the drawings

The characteristics and advantages of the invention will be better understood in relation to the following figures :
- Figures 1a and 1b are perspective views of a capsule according to the invention,
- Figure 2 is a perspective view of the internal part of the housing of the capsule of Figures 1a and 1b,
- Figure 3 is a side view of the capsule of Figures 1a and 1b,
- Figure 4a is the cross section view of the capsule of Figure 3 according to A-A,
- Figure 4b is the cross section view of the capsule of Figure 3 according to B-B,
- Figure 4c is the cross section view of the capsule of Figure 3 according to C-C,
- Figure 4d is the cross section view of the capsule of Figure 3 according to D-D,
- Figure 4e is the cross section view of the capsule of Figure 3 according to E-E,
- Figure 5 is a magnified view of the back side of the housing of the capsule of Figures 1a and 1b,
- Figure 5a is a cross-sectional view of the capsule as taken along plane P of Figure 5,
- Figure 5b-5d illustrate a variant of the hollow at the back side of the capsule,
- Figure 6 is a perspective view of a capsule comprising a wall,
- Figure 7 is a perspective view of a capsule comprising a filter,
- Figure 8 is a vertical cross-sectional view of a module for producing a beverage from a capsule in the system of the present invention in its capsule discharge position,
- Figure 8a is an extracted view of Figure 8,
- Figure 9 is a vertical cross-sectional view of the module for producing a beverage with the capsule in its beverage production position,
- Figure 9a is an extracted view of Figure 9,
- Figures 10a illustrates a first capsule engagement member of the module for producing a beverage,
- Figure 10b is a magnified top view of one of the hook of the first engagement member of Figure 10a,
- Figure 11a is a back view of the first capsule engagement member of Figure 10a with a capsule engaged inside,
- Figure 11b is the front view of the first capsule engagement member of Figure 10a with a capsule engaged inside,
- Figures 12a to 12f are schematic top views of the module and the capsule illustrating the movement of a capsule in the module from its introduction to its ejection,
- Figures 13a to 13c are horizontal cross section views of the module illustrating the movement of the capsule in the module from its beverage production position to its way to the discharge position,
- Figure 14 is a magnified view of the Figure 13c,
- Figure 15 illustrates a beverage preparation machine comprising the beverage production system of the invention,
- Figure 16 illustrates a capsule designed for the system of the present invention.

### Detailed description of the drawings

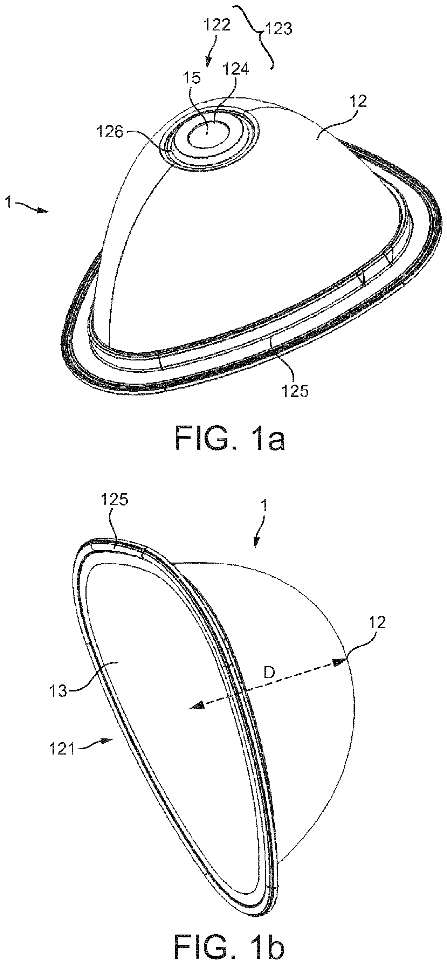

**Figures 1a and 1b** are views of a capsule 1 according to the invention. The capsule comprises a housing 12 defining an internal volume for storing beverage ingredients. This housing is made of plastic material, preferably a plastic material that can be thermoformed, even more preferably a plastic made from polypropylene polymer.

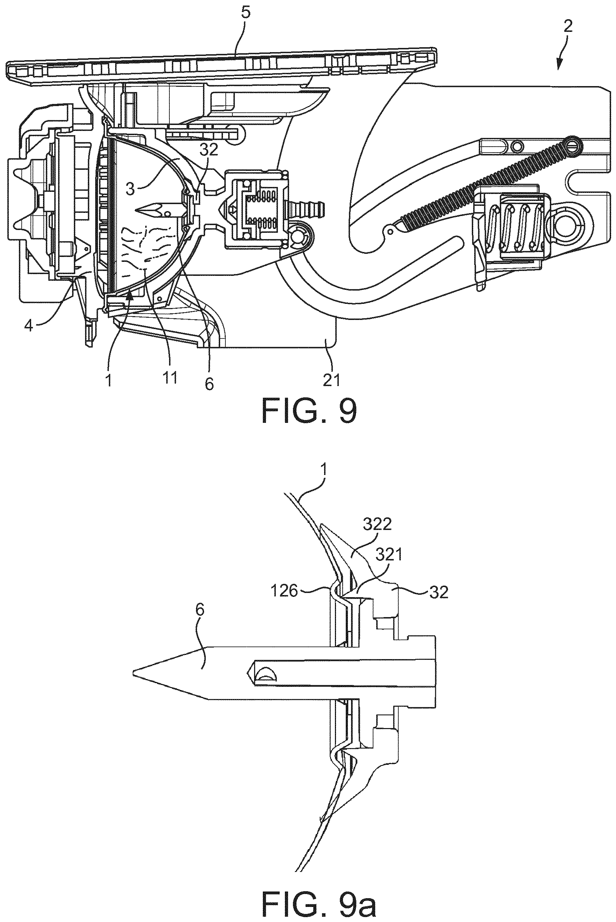

Figure 1a shows the back side 122 of said housing. In the present invention, back side refers to the side where water is introduced in the capsule, whereas the front side refers to the side the beverage is dispensed from. At said back side, the housing presents a water injection area 123 comprising a hole 124 in the housing. This hole is configured for cooperating with and enabling the passage of the water injection needle of a module for producing beverage form the capsule and illustrated hereunder in Figures 8, 9. Preferably this hole is closed by a cover 15. This cover is made of a material pierceable by the water injection needle. It is usually an aluminium membrane.

**Figure 1b** shows the front side 121 of the housing. At said front side, the housing is closed by a front cover 13. The cover 13 is attached to a rim 125 extending from the front opened side of the housing. Preferably at least a part of the cover is pierceable or tearable so that a beverage outlet can be created during beverage preparation. The cover guarantees the freshness and the hygiene of beverage ingredient stored in the capsule. The front cover 13 is preferably flexible and pierceable.

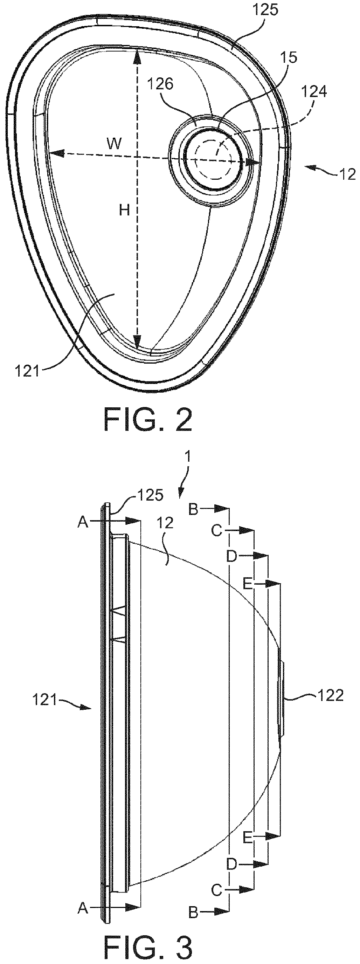

**Figure 2** shows the housing before the beverage ingredient is introduced inside and before its front opened side 121 is closed by the front cover 13. At the back side, the back cover 13 is attached to the internal surface of the housing and hides and closes the hole 124 (illustrated in dotted lines).

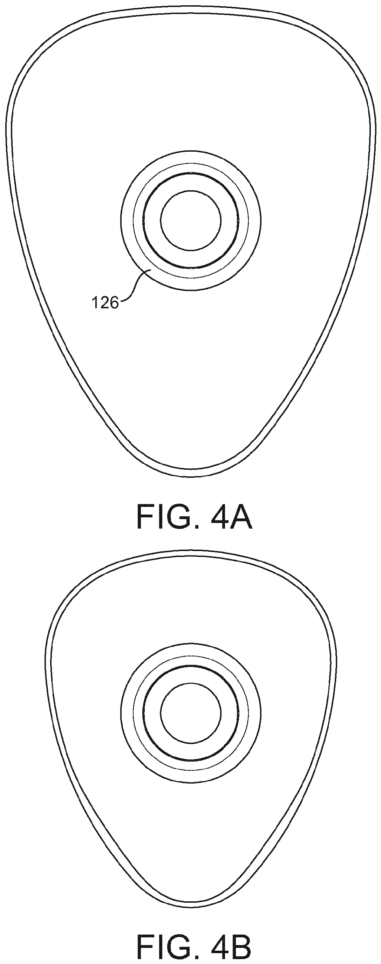

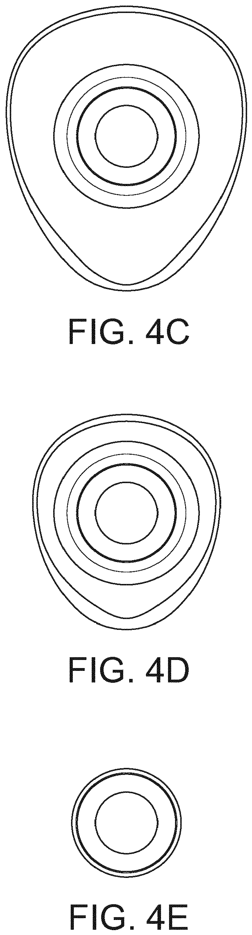

**Figures 4a to 4e** show the cross sections of the housing 12 according to different planes A-A, B-B, C-C, D-D and E-E respectively, from the front to the back of the housing, as illustrated in the side view of the capsule in **Figure 3****.** These figures show how the cross section gradually changes from a globally triangular cross section with smooth rounded corners (Figure 4a) to a circular section (Figure 4e). Whatever the cross section, the housing 12 preferably always present smooth rounded corners and lines. In Figure 4a, it is apparent that the triangular profile is isosceles and the length of either one of both equal sides is greater than the length of the third side (the upper one on Figure 3a).

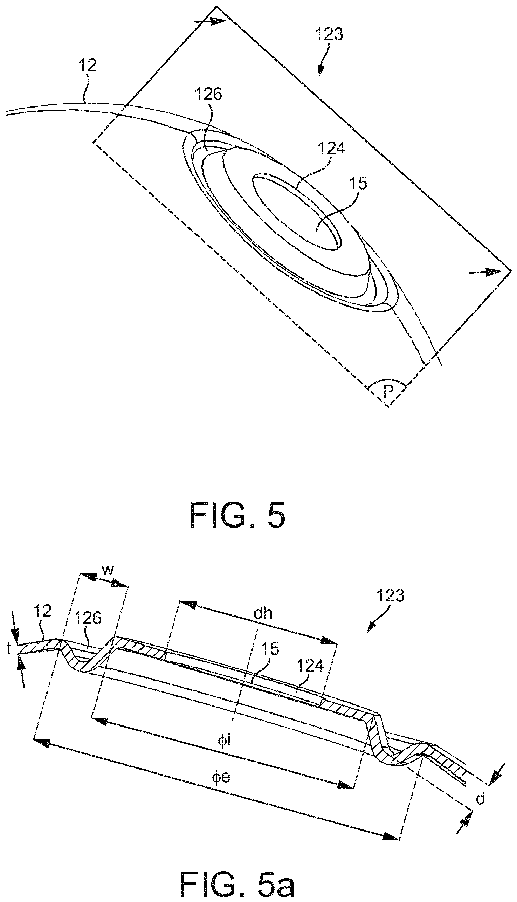

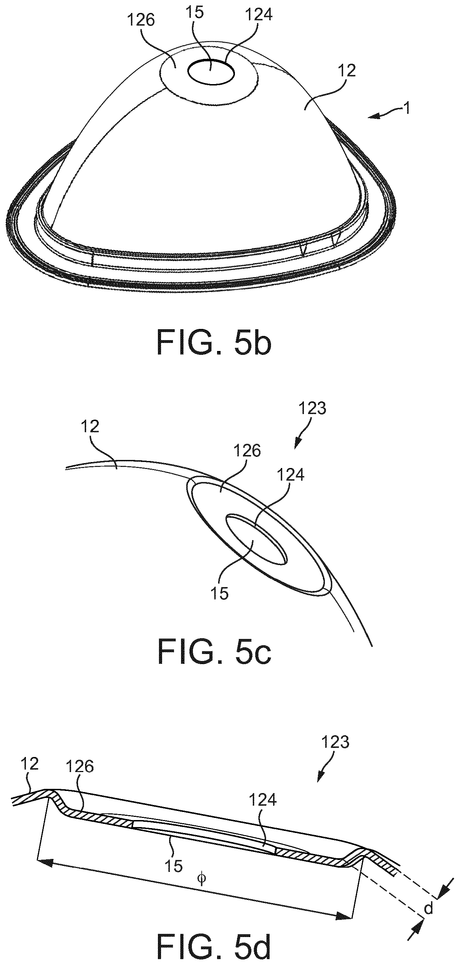

In the illustrated embodiment of **Figures 1a****,** **5 and 5a****,** a hollow 126 surrounds the water injection area 123. In one dimension this hollow extends inside the internal volume of the housing like a recess as clearly apparent in the cross section of Figure 5a. In this embodiment this hollow presents the shape of a ring surrounding the water injection area 123, like a groove. In the illustrated embodiment of Figures 1a, 5 and 5a, this ring surrounds the hole 124.

In another dimension, the hollow 126 extends at least along the annular portion surrounding the hole 124 of the water injection area as apparent in Figures 1a and 5.

The hollow 126 can be larger than this annular portion. In one particular embodiment, the hollow 126 can present the shape of circle as illustrated in **Figures 5b to 5d****.** This circle encompasses the annular portion surrounding the hole 124 of the water injection area. When the capsule 1 is made of plastic and when hot water is injected in the housing, this hollow 126 guarantees that the shape of the capsule is not deformed.

A hollow 126 presenting the shape of an annular ring is preferred for the reason that it does not decrease the internal volume of the housing as much as a hollow 126 presenting the shape of a circle. Actually due to the thickness t (see Figure 5a) of the plastic wall the housing is made of, the internal volume of the capsule is smaller than current housing made of an aluminium sheet. Indeed whereas an aluminium sheet presents a thickness of about 0,1 mm, the thickness of a thermoformed plastic capsule, preferably made of polypropylene polymer, is of about 0,65 mm. Changing the nature of the capsule material from aluminium to plastic has a direct impact on the internal volume of the capsule due to the difference of thickness of these materials. Consequently, keeping the same external shape, the internal volume of the plastic capsule decreases by 6 % compared to the internal volume of the aluminium capsule. Such a difference can directly impact the quality of the beverage preparation when the beverage is tea prepared from tea leaves. Indeed infusing tea leaves in the small volume of a capsule can be difficult due to the swelling of tea leaves in hot water and there is less space for having tea leaves opening in hot water. Any decrease of the capsule volume can become critical. Consequently the design of the groove can be determined in order to take that aspect into account. In particular an annular ring is sufficient to keep the volume necessary for tea leaves brewing while avoiding the shape deformation due to hot water. With such a design the decrease of the internal volume from a capsule made of an aluminium sheet to a capsule made of thermoformed plastic was decreased by 4,5 % only.

The dimensions of the annular portion usually depends at least on the dimensions of the housing of the capsule.

As an example, the illustrated capsules usually comprise a housing presenting :
- a largest height H comprised between 47,9 and 48,5 mm, and
- a largest width W comprised between 36,7 and 37,3 mm, and
- a largest depth D comprised between 24,1 and 24,3 mm.

The hollow 126 preferably extends along at least an annular portion surrounding the hole 15 of the water injection area, said annular portion presenting an internal diameter Øi of 10 mm and an external diameter Øe of 14 mm. By diameters, it is meant the dimension at the internal and external edges of the annular portion, as illustrated in Figures 5a.

The hollow 126 can present a shape limited to the annular portion presenting above internal and external diameters, or can present a ring shape larger than this annular portion or can present the shape of a circle, the ring and the circle comprising the annular portion.

In Figure 5d, the hollow 126 is a circle encompassing the annular portion meaning this circle present a diameter presents a diameter Ø of at least 14 mm.

Preferably the depth d of the hollow 126 is of at least 0,7 mm, and preferably of about 0,9 mm, either in Figure 5a or 5d.

These dimensions H, W, D are illustrated in Figures 1b and 1c and these dimensions Øi, Øe, Ø, w, t and d are illustrated in Figures 5a and 5d.

As illustrated in **Figures 1a****,** **5 and 5a****,** the housing 12 comprises a water injection area 123 comprising a hole 124 in the housing. Preferably the hole 15 of the water injection area is circular and presents a diameter dₕ of at least 4 mm, preferably of at least 5 mm, and even more preferably of at least 6 mm.

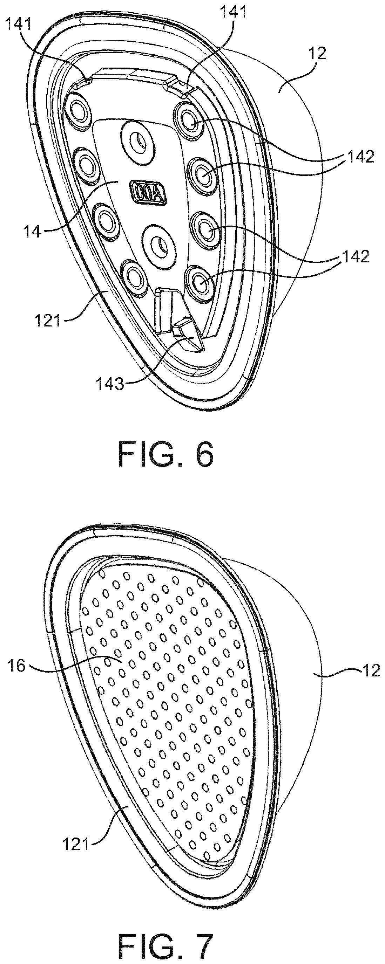

**Figure 6** illustrates a capsule comprising a front wall 14 at the front side of the housing.

The front wall 14 comprises two beverage overflow holes 141. These overflow holes 141 prevent the beverage from leaving the capsule too rapidly and before tea leaves have been sufficiently brewed.

In a preferred mode, the front wall 14 can comprises identification member 142, here holes or absence of holes, designed for being physically contacted by an identification unit of the beverage preparation module. Such a front wall 14 comprising an identification member can be designed according to the teaching of EP-A-1 950 150. Accordingly, information about the optimal preparation of the beverage from the beverage ingredient can be coded through the identification member.

The front wall 14 is usually positioned just under the front cover 13 of the capsule.

In a preferred mode, the front wall 14 can comprise a shearing member 143 on its front face, said shearing member being designed to tear the front cover 13 when the capsule is clamped in the beverage preparation machine further to the interaction of the shearing member with an opening member of the beverage preparation module. Accordingly a beverage outlet can be made in the front cover 13 when the capsule is clamped in the machine. Such a shearing member is described in WO 2010/146101.

**Figure 7** illustrates a capsule comprising a filter 16 at the front side 121 of the housing. The filter prevents tea leaves from leaving the capsule. In a preferred embodiment the filter is attached to the back side of the wall 14 comprising overflow holes 141 so that the filter covers these holes.

In a particular embodiment, such a wall can be designed according to the teaching of WO 2007/042414.

Accordingly, when the capsule comprises tea leaves, a tea beverage of optimised quality and deprived of tea leaves fines is produced.

**Figures 8** **and** **9** illustrate a module 2 for producing a beverage from a capsule according to the invention. The module 2 enables the introduction and the positioning of the capsule for the preparation of a beverage and the ejection of the capsule.

In Figure 8 the module is illustrated in its opened position, that is to say a position where no capsule has been introduced yet. The module 2 is ready for receiving a capsule. The module 2 comprises a frame 21. The module comprises a first capsule engagement member 3 and a second capsule engagement member 4. The second member 4 is fixed whereas the first member 3 is mobile and displaceable between a capsule discharge position (as illustrated in Figure 8) and a beverage production position (as illustrated in Figure 9).

The module comprises an actuator 5 that an operator actuates manually to initiate a beverage preparation once a capsule has been introduced in the module through an opening 7. Once an operator has introduced a capsule in the module 2 through the opening 7, the capsule is retained in front of the second capsule engagement member 4 by support means 71 on which the edge of the capsule leans.

The actuator 5 induces the movement of the first capsule engagement member 3 to the second capsule engagement member 4 by pushing down the actuator 5 with the effect of enclosing the capsule retained by the support means 71 between the two capsule engagement members 3, 4 as illustrated in Figure 9.

The displaceable first capsule engagement member 3 comprises a capsule receptacle 31, said capsule receptacle shape matching at least a part of the outer shape of the housing of the capsule when it is displaced to the beverage production position (Figure 9).

The displaceable first capsule engagement member 3 comprises a water needle 6 for piercing the back cover of the capsule, entering the capsule and injecting water in the capsule. The needle is in fluid connection with a hot water supply (not illustrated).

The displaceable first capsule engagement member 3 comprises a seal 32 at the basis of the water needle 6. This seal guarantees that no water leaks in the machine. Indeed, during beverage preparation the capsule is completely filled with hot water and water may leak from the hole produced by the needle in the back cover 15 of the capsule. Water leakage would dirty the machine, avoids correct beverage preparation since a part of water would not be in contact with beverage ingredient.

**Figure 8a** is an extracted and magnified view of the seal 32 and the needle 6 of Figure 8. The seal comprises two annular parts 321, 322 of different diameters. One annular part 321 guarantees that no liquid leaks in the parts of the beverage preparation machine upstream the needle, whereas the other annular part 322 guarantees that no liquid flows to the opened mouth of the first capsule engagement member.

The seal is usually made of an elastomeric or rubber material presenting resilient and flexible properties. Figure 8a illustrates the seal at rest that is to say not compressed by the capsule. **Figure 9a** is an extracted and magnified view of the back side of the capsule, the seal 32 and the needle 6 of Figure 9. The back side of the capsule is pressed against the larger annular part 322 of the seal but not against the smaller annular part 321 on account of the recess 126 at the back side of the capsule that matches the shape of said smallest annular part 321. The seal provides its effect in terms of water leakage since it guarantees an effective sealing with the largest annular part 322, yet this sealing has no effect on the deformation of the shape of the capsule further to hot water injection.

Actually only the specific interaction of the smallest annular part 321 of the seal with the back side of the plastic capsule has been found to have an impact on the shape deformation with hot water. Accordingly, by designing a plastic capsule with a hollowed annular portion 126 matching the area of the annular seal of the needle, the problem of capsule deformation was solved.

It has been noticed that a module 2 comprising an annular seal 32 that comprises the smaller annular part 321 only, the same effect was obtained with the capsule according to the invention that is no deformation was observed.

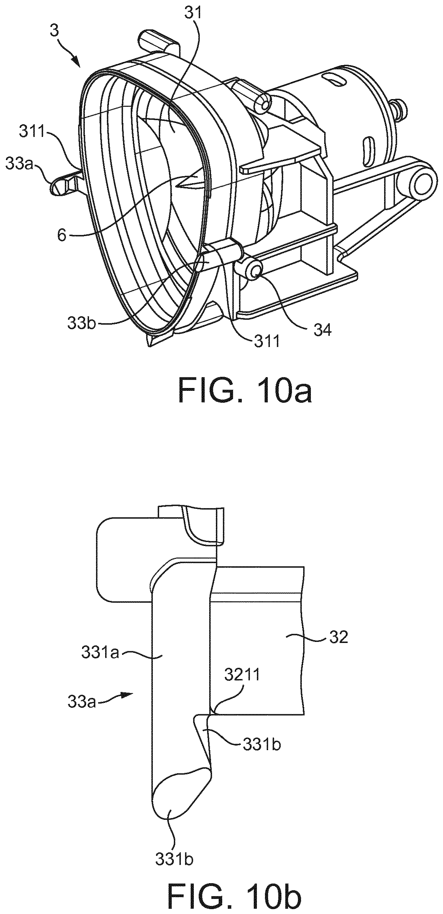

**Figure 10a** illustrates the displaceable first capsule engagement member 3. This member comprises a capsule receptacle 31. The water needle 6 for piercing the capsule and injecting water inside points out from the back side of the capsule receptacle. The first engagement member 3 also comprises retaining means 33a, 33b on each lateral sides of the front part of the hollow member 3. In the illustrated embodiment said retaining means are hooks.

**Figure 10b** is a magnified top view of one of the hooks 33a of Figure 10a. The hook 33a comprises an arm 331a positioned on the lateral side of the capsule receptacle 3 and extending perpendicularly from the front side of said capsule receptacle. The arm 331a presents a slanted free end 331b. The end is slanted in direction of centre of the capsule receptacle 3 so that, when the first engagement member moves towards the capsule, the slanted end 331b slides along the rim of the capsule and slightly compresses this rim to make it enter within the slit 331c of the arm in which it is retained. The same operation happens simultaneously with the other arm 33b on the other side of the rim of the capsule.

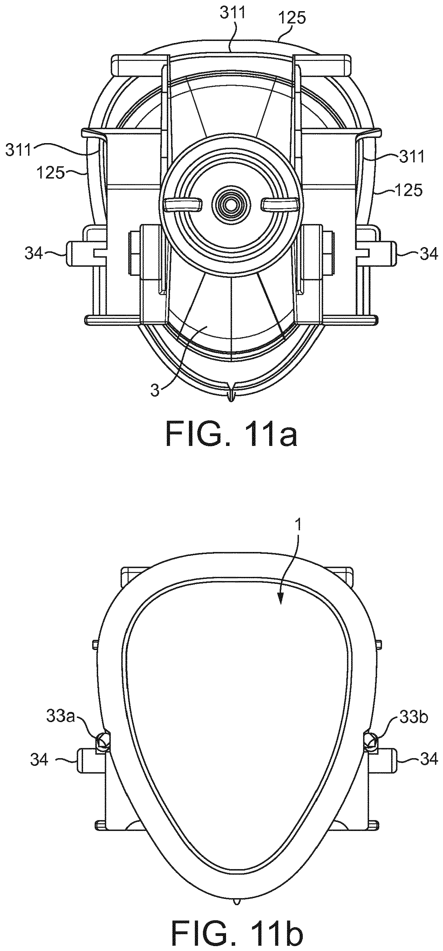

**Figure 11a** illustrates a back view of the first capsule engagement member 3 with the capsule 1 engaged in the capsule receptacle. Some parts of the rim 125 of the capsule extend beyond the edge 311 of the front face of the first capsule engagement member. It is preferable that at least an essentially vertical part of the rim 125 extends beyond the edge 311 of the front face of the first capsule engagement member. The term vertical is to be interpreted according to the position of the capsule inside the module according to its normal orientation for the production of a beverage.

The first capsule engagement member 3 also comprises means for coupling said member to means of displacement that is the guiding pins 34, provided at the lateral sides of the capsule receptacle. These guiding pins cooperate with corresponding guiding curves in the frame of the module 2 (illustrated as reference 211 in Figure 8) in order to guide the movement of the first capsule engagement member.

**Figure 11b** illustrates a front view of the first capsule engagement member 3 and the capsule 1 engaged in the capsule receptacle, the rim 125 being hold by hooks 33a, 33b.

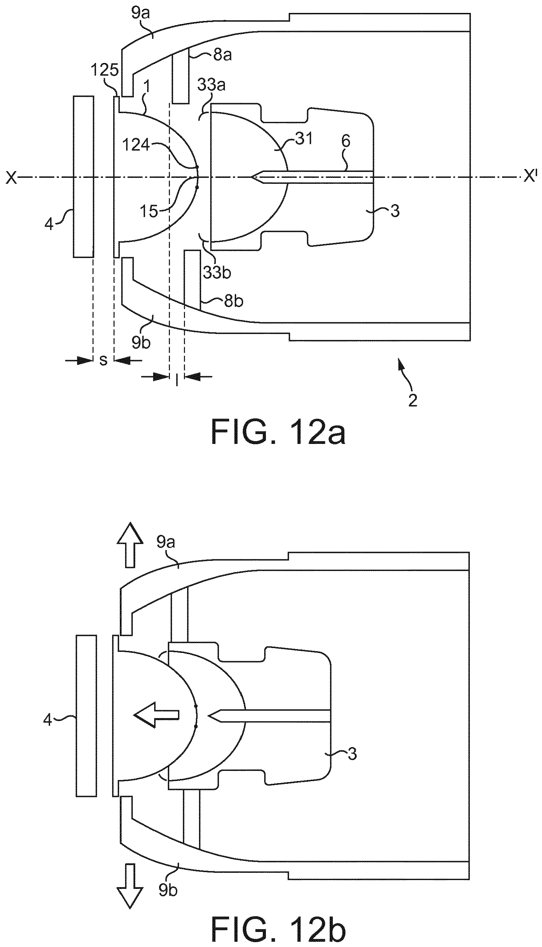

**Figures 12a to 12f** are schematic views of the module 2 illustrating the movement of the capsule 1 in the module 2 from its introduction in the module to its ejection out of the module. The figures are top views of the module and make apparent the relative movements of the first and second capsule engagement members 3, 4, the capsule 1, the tabs 8a, 8b, pre-fixation members 9a, 9b and the hooks 33a, 33b.

In **Figure 12a****,** the capsule 1 has just been introduced in the module 2. The capsule comprises a back side hole 124 closed by a back cover 15. The rim 125 of the capsule is positioned in space s demarcated between the front end of the module corresponding of the second capsule engagement member 4 and the end of pre-fixation members 9a, 9b. These pre-fixation members 9a, 9b prevent the capsule from falling in direction of the back side of the module. A lower part of the rim 125 leans on support means (illustrated in Figure 8) to avoid that the capsule falls downwards. Accordingly the capsule is retained by its rim 125 in this position.

The first engagement member 3 is positioned away from the capsule 1 and the second engagement member 4. The first engagement member 3 is able to move along a longitudinal axis XX' to and away from the second engagement member 4.

Figure 12a illustrates the presence of the two tabs 8a, 8b on the lateral sides of the module. Generally these tabs are fixed in the lateral walls of the frame of the module and are positioned so as to be able to contact the rim 125 of the capsule when it is moved to the ejection position. The positions of the tabs along the longitudinal axis XX' are offset one relative to the other by a distance I.

In **Figure 12b****,** the first engagement member 3 is displaced in direction of the second engagement member 4. Simultaneously the pre-fixation members 9a, 9b begin to be moved away from the rim of the capsule as illustrated by arrows.

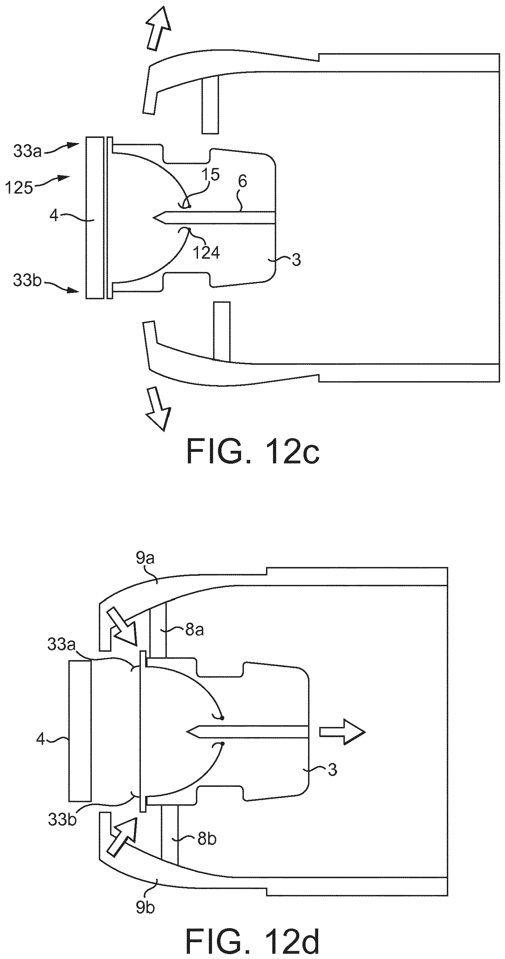

In **Figure 12c****,** the first engagement member 3 has completed its movement in direction of the second engagement member 4. The pre-fixation members 9a, 9b have been completely moved away from the rim of the capsule and the capsule is maintained in the capsule receptacle 31 of the first engagement member and against the second engagement member 4. The water needle 6 has pierced the cover 15 and entered the hole 124 of the capsule. Water can be introduced through the needle and the beverages preparation can happen. The rim 125 of the capsule has been engaged by the hooks 33a, 33b (not illustrated because hidden by the capsule and the second capsule engagement member).

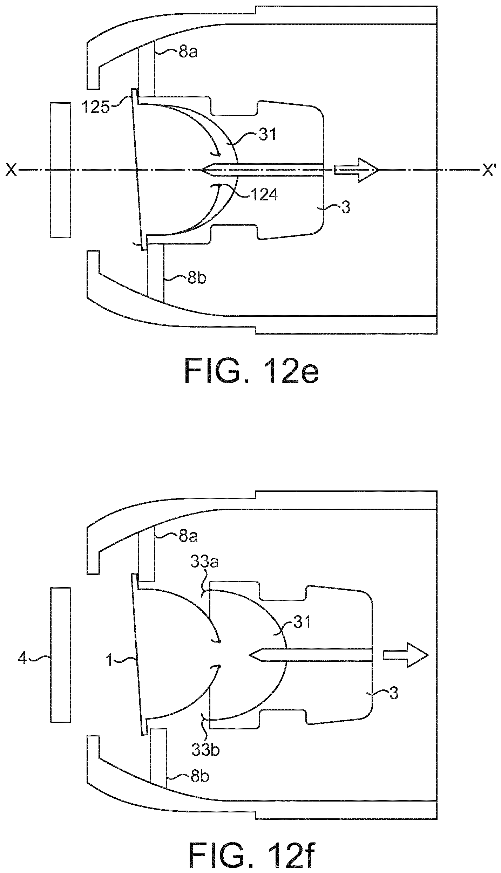

In **Figure 12d****,** the ejection movement begins. The first engagement member 3 moves back and away from the second engagement member 4 and takes the capsule with. The pre-fixation members 9a, 9b are able to come back to their initial position as illustrated by arrows. In **Figure 12e****,** while the first engagement member 3 moves back, a lateral part of the rim 125 of the capsule is retained by a first tab 8a which induces the lateral detachment of the capsule from the capsule receptacle 31, in particular the rim 125 is detached from the hook 33a (this one is not visible in Figure 12e because it is hidden by the capsule) On the other lateral side, the other hook 33b still retains the rim 125.

In **Figure 12f****,** while the first engagement member 3 goes on moving back, another lateral part 125 of the rim of the capsule is retained by the second tab 8b which induces the full detachment of the capsule from the capsule receptacle 31, the rim 125 being detached from the second hook 33b. The first engagement member 3 is able to finish its movement to its initial position, while the capsule can fall by gravity under the module 2.

In the step illustrated in Figure 12e, the capsule 1 is retained in a position where the hole 124 of the capsule is not aligned on the axis XX' corresponding to the linear movement of the first capsule engagement member 3 and accordingly of the water needle 6 attached to said member. Consequently, the needle 6, that was initially centred on the hole 124 in Figures 12c and 12d, is not centred on this hole any longer at the time the rim 125 of the capsule is retained by the first tab 8a in Figure 12e. If the hole happens to be too small or not well centred at the manufacturing step, the needle can rub along the edge of the hole 124 and impinge directly the way the handle is moved back to its initial position. The operator may feel a brake on the movement of the handle.

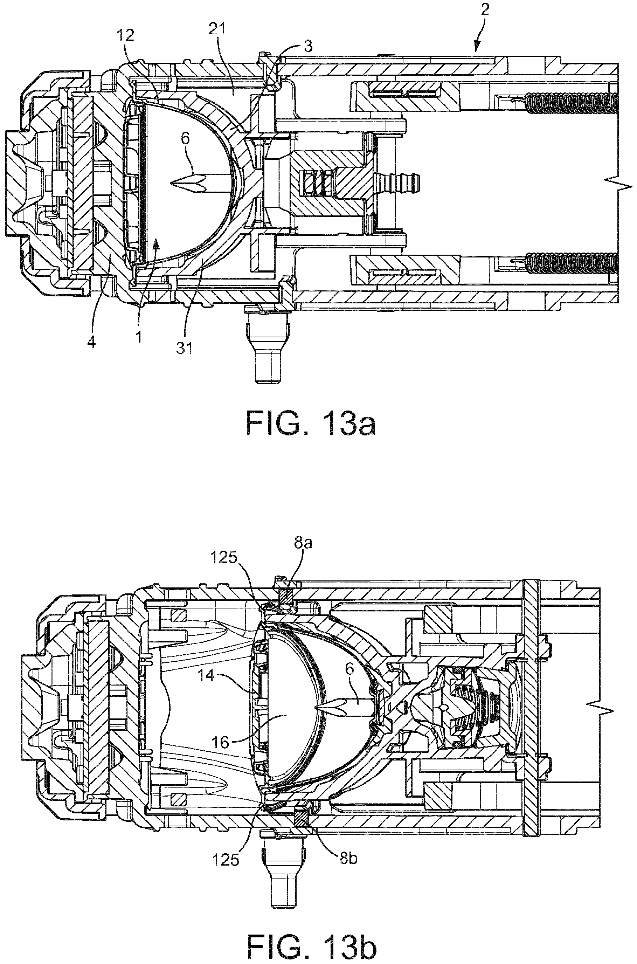

**Figures 13a to 13c** are horizontal cross section views of the module 2 illustrating the movement of the capsule 1 in the module from its position enclosed in the module to its way to the ejection out of the module. The figures are top views of the module and make apparent the relative movements of the first and second capsule engagement members 3, 4 and the capsule 1.

**Figure 13a** is comparable to Figure 12c where the capsule receptacle 31 has completed its movement in direction of the second engagement member 4 and the capsule 1 is clamped between the first and the second engagement members. The water needle 6 has pierced the cover 15 and entered the hole 124 of the capsule ; the extraction can happen.

**Figure 13b** is comparable to Figure 12d where the capsule ejection movement begins. The first engagement member 3 is able to move along the longitudinal axis XX' to and away from the second capsule engagement member 4. The first engagement member 3 moves back and away from the second capsule engagement member 4 and takes the capsule 1 with. The vertical walls of the frame 21 of the module comprises the retaining means in form of tabs 8a, 8b. These tabs extend from the lateral walls of the housing to such a length that they do not interact with the receptacle 31 of first capsule engagement member. Yet they are positioned on the path of the rim 125 of the capsule when it moves back with the first capsule engagement member 3. The positions of the tabs along the longitudinal axis XX' are offset one relative to the other by a distance I.

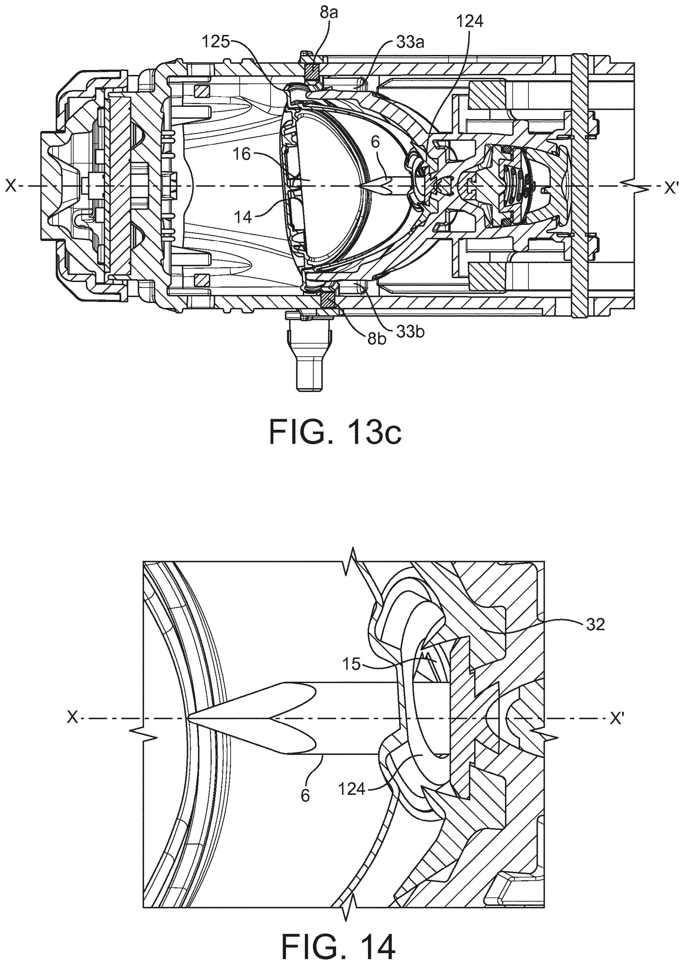

**Figure 13c** is comparable to Figure 12e. While the first engagement member 3 moves back, a lateral part 125 of the rim of the capsule is retained by the first tab 8a which induces the lateral detachment of the capsule from the capsule receptacle 32, in particular the part of the rim 125a is detached from the hook 33a. At this time of the movement, the capsule is tilted and the axis YY' on which is centred the hole 124 at the back side of the capsule is not aligned with the axis XX' any longer.

**Figure 14** is a magnified view of the hole 124 in the position of Figure 13c. The cover 15 is torn and the needle is inside the back hole 124. The misalignment between the capsule and the axis XX' is such that the needle 6 is not centred in the middle of the hole 124 of the capsule but is closer to one lateral side of the hole 124. This figure illustrates the importance of providing a capsule with a back hole 124 sufficiently big to enable the needle to pass through without bumping on the edge of the hole or even on the capsule wall around the hole.

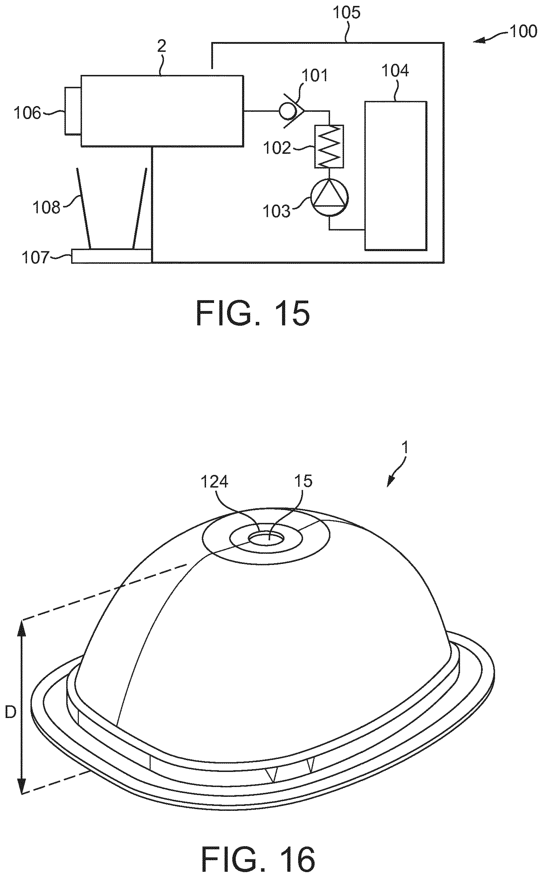

**Figure 15** illustrates a beverage preparation machine 100 comprising the beverage production system of the invention. The machine comprises a module 2, such as illustrated in Figures 8a and 8b. The needle of the module is connected to a fluid supply comprising successively a check valve 101, a heater 102, a pump 103 and a fluid supply, usually a water tank 104. Other well-known elements for supplying fluid can be alternatively used. The different elements of the machine can be surrounded by a housing 105. The machine can comprise a drip tray 108 for supporting and positioning a cup 109 under the module 2. A user interface 106 can be provided to control the beverage preparation.

**Figure 16** illustrates a capsule 1 similar to the capsule of Figure 1a except that the back side of the housing is essentially flat. Compared to the capsule of Figure 1a, the back side has been truncated and, accordingly, the depth D of the housing is shorter. Consequently, when this capsule is introduced in the module illustrated in Figure 8, the seal 32 at the basis of the needle and the back side of the capsule are not squeezed one against each other and no deformation of the shape of the capsule is observed after brewing and ejection. Yet such a capsule presents as smaller internal volume compared to the capsule illustrated in Figure 1a and 5b. Accordingly less space is provided for the brewing of tea leaves.

**List of references in the drawings :**

| | |
|---|---|
| capsule | 1 |
| beverage ingredient | 11 |
| housing | 12 |
| front side | 121 |
| backside | 122 |
| water injection area | 123 |
| hole | 124 |
| rim | 125 |
| hollow | 126 |
| front cover | 13 |
| front wall | 14 |
| overflow | 141 |
| identification member | 142 |
| shearing member | 143 |
| back cover | 15 |
| filter | 16 |
| module | 2 |
| frame | 21 |
| guiding curve | 211 |
| first capsule engagement member | 3 |
| capsule receptacle | 31 |
| edge at front face of capsule receptacle | 311 |
| seal | 32 |
| annular part | 321, 322 |
| hooks | 33a, 33b |
| guiding pin | 34 |
| second capsule engagement member | 4 |
| actuator | 5 |
| water needle | 6 |
| opening | 7 |
| support means | 71 |
| retaining means | 8a, 8b |
| pre-fixation members | 9a, 9b |
| beverage machine | 100 |
| check valve | 101 |
| heater | 102 |
| pump | 103 |
| tank | 104 |
| housing | 105 |
| user interface | 106 |
| drip tray | 107 |
| cup | 108 |

## Claims

1. Capsule (1) containing beverage ingredient (11), such as tea leaves, configured for preparing a beverage, such as tea, by injection of hot water therein and comprising :
- a housing (12) for storing said beverage ingredient, said housing comprising :
- a front opened side (121),
- a back side (122) comprising a water injection area (123), said water injection area comprising a hole (124) in the housing,
- a rim (125) extending from the front opened side, and
- a front cover (13) and/or a wall (14) closing the front opened side of the housing, and
- a back cover (15) closing the hole (124) of the water injection area, and
- the housing (12) presenting a cross section varying from the back side to the front side from a circular section to a globally triangular section - with smooth rounded corners - respectively, and
**characterized in that** :
- the housing (12) is made of plastic material, and
- the back side (122) of the housing comprises a hollow (126) around the water injection area (123), said hollow extending inside the internal volume of the housing and said hollow extending at least along an annular portion surrounding the hole (124) of the water injection area.

2. Capsule according to Claim 1, wherein the plastic material is a thermoforming polymer.

3. Capsule according to Claim 1 or 2, wherein the plastic material is a polypropylene (PP) based plastic material.

4. Capsule according to any one of the precedent claims, wherein the hollow (126) presents the shape of a ring surrounding the hole (124) of the water injection area.

5. Capsule according to any one of Claims 1 to 3, wherein the hollow (126) presents the shape of a circle comprising the hole (124) of the water injection area.

6. Capsule according to any one of the precedent claims, wherein :
- the housing (12) presents :
• a largest height H comprised between 47,9 and 48,5 mm, and
• a largest width W comprised between 36,7 and 37,3 mm, and
• a largest depth D comprised between 24,1 and 24,3 mm, and
- the annular portion surrounding the hole (124) of the water injection area and along which the hollow extends presents an internal diameter of 10 mm and an external diameter of 14 mm.

7. Capsule according to any one of the precedent claims wherein at least along the annular portion surrounding the hole (124) of the water injection area, the depth of the hollow is of at least 0,7 mm.

8. Capsule according to any one of the precedent claims wherein the hole (124) of the water injection area presents a diameter of at least 4 mm, preferably of at least 5 mm, even more preferably of at least 6 mm.

9. Capsule according to any one of the precedent claims wherein the housing (12) of the capsule is manufactured by :
- thermoforming the housing, and then
- punching of the hole (124) at the back side of the housing.

10. A beverage production system comprising a capsule according to any one of the precedent claims and a module (2) for producing a beverage from the capsule,
- the module (2) comprising :
• a first capsule engagement member (3), which can be displaced relative to a second, co-operating capsule engagement member (4) between a capsule discharge position and a beverage production position,
• means (5) for actively retracting the first capsule engagement member (3) from the beverage production position to the capsule discharge position in which the capsule (1) is discharged from the first capsule engagement member (3),
- the displaceable first capsule engagement member (3) comprising :
• a capsule receptacle (31), said capsule receptacle shape matching at least a part of the outer shape of the housing (12) of the capsule, and
• a water needle (6) for entering the capsule through the hole (124) at the back side of the capsule housing and injecting water in the capsule, and
• a seal (32) at the basis of the water needle, said seal comprising at least one annular part (321), said at least annular part matching at least the shape of the annular portion of the hollow surrounding the hole of the water injection area of the capsule.

11. A beverage production system according to the precedent claim and comprising a capsule according to Claim 8, wherein :
- the capsule (1) presents a rim size such that at least a part of the rim (125) of the capsule extends beyond at least a part of the first capsule engagement member (3) once it is engaged in the first capsule engagement member, and
- the displaceable first capsule engagement member (3) comprises holding means configured for holding the capsule within the capsule receptacle (31),
- the module comprises at least two means (8a, 8b) for retaining the rim of the capsule extending beyond the first capsule engagement member when said first capsule engagement member (3) is displaced from the beverage production position to its capsule discharge position,
wherein said holding means are discrete hooks (341, 342) configured to engage with the rim (125) of the capsule, and
wherein said two means (8a, 8b) for retaining the rim of the capsule are configured so that, during the displacement of the first capsule engagement member (3) from the beverage production position to its capsule discharge position, one (8b) of the two retaining means engages the rim of the capsule before the other retaining means (8a).

12. A beverage production system according to the precedent claim, wherein :
- one retaining means (8a, 8b) is positioned on each lateral side of the longitudinal axis (XX') of displacement of the first capsule engagement member (3), and
- the positions of the two retaining means along said longitudinal axis of displacement are offset one relative to the other.

13. A beverage production system according to the precedent claim, wherein the positions of the two retaining means (8a, 8b) along the longitudinal axis of the housing of the module are offset one relative to the other by at least 1 mm, preferably by at most 5 mm, even more preferably by 3 and 4 mm.

14. Use of a capsule according to any one of Claims 1 to 9 in a beverage production system according to any of Claims 10 to 13, wherein :
- the water needle (6) enters the hole (124) comprised in the water injection area at the back side of the capsule housing, and
- the annular part (321) of the seal at the basis of the water needle cooperates with the hollow (126) surrounding the hole of the water injection area of the capsule.

15. A beverage production system comprising a module (2) for producing a beverage from a capsule,
- the module (2) comprising :
• a first capsule engagement member (3), which can be displaced relative to a second, co-operating capsule engagement member (4) between a capsule discharge position and a beverage production position,
• means (5) for actively retracting the first capsule engagement member (3) from the beverage production position to the capsule discharge position in which the capsule (1) is discharged from the first capsule engagement member (3),
• the displaceable first capsule engagement member (3) comprising :
• a capsule receptacle (31), said capsule receptacle shape matching at least a part of the outer shape of the housing (12) of the capsule, and
• a water needle (6) for entering the capsule through the hole (124) at the back side of the capsule housing and injecting water in the capsule, and
• a seal (32) at the basis of the water needle, said seal comprising at least one annular part (321), said at least annular part matching at least the shape of the annular portion of the hollow surrounding the hole of the water injection area of the capsule,
and
- a capsule (1) containing beverage ingredient (11), such as tea leaves, configured for preparing a beverage, such as tea, by injection of hot water therein and comprising :
- a housing (12) for storing said beverage ingredient, said housing comprising :
• a front opened side (121),
• a back side (122) comprising a water injection area (123), said water injection area comprising a hole (124) in the housing,
• a rim (125) extending from the front opened side, and
- a front cover (13) and/or a wall (14) closing the front opened side of the housing, and
- a back cover (15) closing the hole (124) of the water injection area, and
- the housing (12) presenting a cross section varying from the back side to the front side from a circular section to a globally triangular section - with smooth rounded corners - respectively, and
wherein :
- the housing (12) is made of plastic material, and
- the back side (122) of the housing is designed so that it is not squeezed against the seal at the basis of the water needle when the capsule (1) is housed in the capsule receptacle (31) and the first capsule engagement member (3) is in the beverage production position.

16. A housing (12) of a capsule for holding beverage ingredient, said housing comprising :
- a front opened side (121),
- a back side (122) comprising a water injection area (123), said water injection area comprising a hole (124) in the housing,
- a rim (125) extending from the front opened side, and
- the housing (12) presenting a cross section varying from the back side to the front side from a circular section to a globally triangular section - with smooth rounded corners - respectively, and
wherein :
- the housing (12) is made of plastic material, and
- the back side (122) of the housing comprises a hollow (126) around the water injection area (123), said hollow extending inside the internal volume of the housing and said hollow extending at least along an annular portion surrounding the hole (124) of the water injection area.

17. A housing according to Claim 16 wherein a back cover (15) closes the hole (124) of the water injection area.

## Patentansprüche

1. Kapsel (1), enthaltend eine Getränkezutat (11), wie zum Beispiel Teeblätter, die zum Zubereiten eines Getränks wie z. B. Tee durch Einspritzung von heißem Wasser darin eingerichtet ist und umfasst:
- ein Gehäuse (12) zum Speichern der Getränkezutat, wobei das Gehäuse umfasst:
- eine vordere geöffnete Seite (121),
- eine Rückseite (122), umfassend einen Wassereinspritzbereich (123), wobei der Wassereinspritzbereich ein Loch (124) in dem Gehäuse umfasst,
- einen Rand (125), der sich von der vorderen geöffneten Seite erstreckt, und
- eine vordere Abdeckung (13) und/oder eine Wand (14), welche die vordere geöffnete Seite des Gehäuses verschließt/verschließen, und
- eine hintere Abdeckung (15), die das Loch (124) des Wassereinspritzbereichs verschließt, und
- das Gehäuse(12), das einen Querschnitt zeigt, der sich von der Rückseite zur Vorderseite bzw. von einem kreisförmigen Abschnitt zu einem global dreieckigen Abschnitt - mit glatten abgerundeten Ecken - ändert, und **dadurch gekennzeichnet, dass**
das Gehäuse (12) aus Kunststoffmaterial hergestellt ist und
- die Rückseite (122) des Gehäuses einen Hohlraum (126) um den Wassereinspritzbereich (123) umfasst, wobei sich der Hohlraum innerhalb des Innenvolumens des Gehäuses erstreckt und sich der Hohlraum mindestens entlang eines ringförmigen Abschnitts erstreckt, der das Loch (124) des Wassereinspritzbereichs umgibt.

2. Kapsel nach Anspruch 1, wobei das Kunststoffmaterial ein wärmehärtendes Polymer ist.

3. Kapsel nach Anspruch 1 oder 2, wobei das Kunststoffmaterial ein Kunststoffmaterial auf der Basis von Polypropylen (PP) ist.

4. Kapsel nach einem der vorhergehenden Ansprüche, wobei der Hohlraum (126) die Form eines Rings zeigt, der das Loch (124) des Wassereinspritzbereichs umgibt.

5. Kapsel nach einem der Ansprüche 1 bis 3, wobei der Hohlraum (126) die Form eines Kreises zeigt, umfassend das Loch (124) des Wassereinspritzbereichs.

6. Verfahren nach einem der vorhergehenden Ansprüche, wobei:
- das Gehäuse (12) zeigt:
e ine größte Höhe H, die zwischen 47,9 und 48,5 mm beträgt, und
e ine größte Breite W, die zwischen 36,7 und 37,3 mm beträgt, und
e ine größte Tiefe D, die zwischen 24,1 und 24,3 mm beträgt, und
- der ringförmige Abschnitt, der das Loch (124) des Wassereinspritzbereichs umgibt und entlang dessen sich der Hohlraum erstreckt, einen Innendurchmesser von 10 mm und einen Außendurchmesser von 14 mm zeigt.

7. Kapsel nach einem der vorhergehenden Ansprüche, wobei mindestens entlang des ringförmigen Abschnitts, der das Loch (124) des Wassereinspritzbereichs umgibt, die Tiefe des Hohlraums mindestens 0,7 mm beträgt.

8. Kapsel nach einem der vorhergehenden Ansprüche, wobei das Loch (124) des Wassereinspritzbereichs einen Durchmesser von mindestens 4 mm, vorzugsweise von mindestens 5 mm, noch mehr bevorzugt von mindestens 6 mm zeigt.

9. Kapsel nach einem der vorhergehenden Ansprüche, wobei das Gehäuse (12) der Kapsel hergestellt ist durch:
- Thermoformen des Gehäuses und dann
- Stanzen des Lochs (124) an der Rückseite des Gehäuses.

10. Getränkeherstellungssystem, umfassend eine Kapsel nach einem der vorhergehenden Ansprüche und ein Modul (2) zum Herstellen eines Getränks aus der Kapsel,
- wobei das Modul (2) umfasst:
- ein erstes Kapseleingriffselement (3), das relativ zu einem zweiten zusammenwirkenden Kapseleingriffselement (4) zwischen einer Kapselausgabeposition und einer Getränkeherstellungsposition verschoben werden kann,
· Mittel (5) zum aktiven Zurückziehen des ersten Kapseleingriffselements (3) von der Getränkeherstellungsposition in die Kapselausgabeposition, in der die Kapsel (1) aus dem ersten Kapseleingriffselement (3) ausgegeben wird,
- wobei das verschiebbare erste Kapseleingriffselement (3) umfasst:
- eine Kapselaufnahme (31), wobei die Kapselaufnahmeform mindestens mit einem Teil der äußeren Form des Gehäuses (12) der Kapsel übereinstimmt, und
- eine Wassernadel (6) zum Eindringen in die Kapsel durch das Loch (124) an der Rückseite des Kapselgehäuses und zum Einspritzen von Wasser in die Kapsel, und
- eine Dichtung (32) am Unterteil der Wassernadel, wobei die Dichtung mindestens einen ringförmigen Teil (321) umfasst, wobei der mindestens ringförmige Teil mindestens mit der Form des ringförmigen Abschnitts des Hohlraums übereinstimmt, der das Loch des Wassereinspritzbereichs der Kapsel umgibt.

11. Getränkeherstellungssystem nach dem vorhergehenden Anspruch und umfassend eine Kapsel nach Anspruch 8, wobei:
- die Kapsel (1) eine derartige Randgröße zeigt, dass sich mindestens ein Teil des Rands (125) der Kapsel über mindestens einen Teil des ersten Kapseleingriffselements (3) hinaus erstreckt, sobald dieser mit dem ersten Kapseleingriffselement in Eingriff steht, und
- das verschiebbare erste Kapseleingriffselement (3) Haltemittel zum Halten der Kapsel in der Kapselaufnahme (31) umfasst,
- das Modul mindestens zwei Mittel (8a, 8b) zum Halten des Rands der Kapsel umfasst, der sich über das erste Kapseleingriffselement hinaus erstreckt, wenn das erste Kapseleingriffselement (3) aus der Getränkeherstellungsposition in seine Kapselausgabeposition verschoben ist,
wobei die Haltemittel getrennte Haken (341, 342) sind, die so eingerichtet sind, dass sie mit dem Rand (125) der Kapsel in Eingriff gelangen, und
wobei die zwei Mittel (8a, 8b) zum Halten des Rands der Kapsel so eingerichtet sind, dass während der Verschiebung des ersten Kapseleingriffselements (3) von der Getränkeherstellungsposition in die Kapselausgabeposition eines (8b) der zwei Haltemittel vor dem anderen Haltemittel (8a) mit dem Rand der Kapsel in Eingriff gelangt.

12. Getränkeherstellungssystem nach einem der vorhergehenden Ansprüche, wobei:
- ein Haltemittel (8a, 8b) auf jeder lateralen Seite der Verschiebungslängsachse (XX') des ersten Kapseleingriffselements (3) positioniert ist und
- die Positionen der zwei Haltemittel entlang der Verschiebungslängsachse relativ zueinander versetzt sind.

13. Getränkeherstellungssystem nach dem vorhergehenden Anspruch, wobei die Positionen der zwei Haltemittel (8a, 8b) entlang der Längsachse des Gehäuses des Moduls relativ zueinander um mindestens 1 mm, vorzugsweise um höchstens 5 mm, noch mehr bevorzugt um 3 und 4 mm versetzt sind.

14. Verwendung einer Kapsel nach einem der Ansprüche 1 bis 9 in einem Getränkeherstellungssystem nach einem der Ansprüche 10 bis 13, wobei:
- die Wassernadel (6) in das Loch (124) eintritt, das im Wassereinspritzbereich an der Rückseite des Kapselgehäuses umfasst ist, und
- der ringförmige Teil (321) der Dichtung am Unterteil der Wassernadel mit dem Hohlraum (126) zusammenwirkt, der das Loch des Wassereinspritzbereichs der Kapsel umgibt.

15. Getränkeherstellungssystem, umfassend ein Modul (2) zum Herstellen eines Getränks aus einer Kapsel,
- wobei das Modul (2) umfasst:
- ein erstes Kapseleingriffselement (3), das relativ zu einem zweiten zusammenwirkenden Kapseleingriffselement (4) zwischen einer Kapselausgabeposition und einer Getränkeherstellungsposition verschoben werden kann,
- Mittel (5) zum aktiven Zurückziehen des ersten Kapseleingriffselements (3) von der Getränkeherstellungsposition in die Kapselausgabeposition, in der die Kapsel (1) aus dem ersten Kapseleingriffselement (3) ausgegeben wird,
- wobei das verschiebbare erste Kapseleingriffselement (3) umfasst:
- eine Kapselaufnahme (31), wobei die Kapselaufnahmeform mindestens mit einem Teil der äußeren Form des Gehäuses (12) der Kapsel übereinstimmt, und
- eine Wassernadel (6) zum Eindringen in die Kapsel durch das Loch (124) an der Rückseite des Kapselgehäuses und zum Einspritzen von Wasser in die Kapsel, und
- eine Dichtung (32) am Unterteil der Wassernadel, wobei die Dichtung mindestens einen ringförmigen Teil (321) umfasst, wobei der mindestens ringförmige Teil mindestens mit der Form des ringförmigen Abschnitts des Hohlraums übereinstimmt, der das Loch des Wassereinspritzbereichs der Kapsel umgibt,
und
- eine Kapsel (1), enthaltend eine Getränkezutat (11), wie zum Beispiel Teeblätter, die zum Zubereiten eines Getränks wie z. B. Tee durch Einspritzung von heißem Wasser in die Kapsel eingerichtet ist und umfasst:
- ein Gehäuse (12) zum Speichern der Getränkezutat, wobei das Gehäuse umfasst:
- eine vordere geöffnete Seite (121),
- eine Rückseite (122), die einen Wassereinspritzbereich (123) umfasst, wobei der Wassereinspritzbereich ein Loch (124) im Gehäuse umfasst,
- einen Rand (125), der sich von der vorderen geöffneten Seite erstreckt, und
- eine vordere Abdeckung (13) und/oder eine Wand (14), welche die vordere geöffnete Seite des Gehäuses verschließt/verschließen, und
- eine hintere Abdeckung (15), die das Loch (124) des Wassereinspritzbereichs verschließt, und
- das Gehäuse (12) einen Querschnitt zeigt, der sich von der Rückseite zur Vorderseite bzw. von einem kreisförmigen Abschnitt zu einem global dreieckigen Abschnitt - mit glatten abgerundeten Ecken - ändert, und
wobei:
- das Gehäuse (12) aus Kunststoffmaterial hergestellt ist und
- die Rückseite (122) des Gehäuses so ausgelegt ist, dass sie nicht gegen die Dichtung am Unterteil der Wassernadel gedrückt wird, wenn die Kapsel (1) in der Kapselaufnahme (31) untergebracht ist und sich das erste Kapseleingriffselement (3) in der Getränkeherstellungsposition befindet.

16. Gehäuse (12) einer Kapsel zum Halten einer Getränkezutat, wobei das Gehäuse umfasst:
- eine vordere geöffnete Seite (121),
- eine Rückseite (122), umfassend einen Wassereinspritzbereich (123), wobei der Wassereinspritzbereich ein Loch (124) in dem Gehäuse umfasst,
- einen Rand (125), der sich von der vorderen geöffneten Seite erstreckt, und
- das Gehäuse (12) einen Querschnitt zeigt, der sich von der Rückseite zur Vorderseite bzw. von einem kreisförmigen Abschnitt zu einem global dreieckigen Abschnitt - mit glatten abgerundeten Ecken - ändert, und
wobei:
- das Gehäuse (12) aus Kunststoffmaterial hergestellt ist und
- die Rückseite (122) des Gehäuses einen Hohlraum (126) um den Wassereinspritzbereich (123) umfasst, wobei sich der Hohlraum innerhalb des Innenvolumens des Gehäuses erstreckt und sich der Hohlraum mindestens entlang eines ringförmigen Abschnitts erstreckt, der das Loch (124) des Wassereinspritzbereichs umgibt.

17. Gehäuse nach Anspruch 16, wobei eine hintere Abdeckung (15) das Loch (124) des Wassereinspritzbereichs verschließt.

## Revendications

1. Capsule (1) contenant un ingrédient de boisson (11), tel que des feuilles de thé, configurée pour la préparation d'une boisson, telle que le thé, par injection d'eau chaude dans celle-ci et comprenant :
- un boîtier (12) pour stocker ledit ingrédient de boisson, ledit boîtier comprenant :
- un côté ouvert avant (121),
- un côté arrière (122) comprenant une zone d'injection d'eau (123), ladite zone d'injection d'eau comprenant un trou (124) dans le boîtier,
- un rebord (125) s'étendant depuis le côté ouvert avant, et
- un couvercle avant (13) et/ou une paroi (14) fermant le côté ouvert avant du boîtier, et
- un couvercle arrière (15) fermant le trou (124) de la zone d'injection d'eau, et
- le boîtier (12) présentant une section transversale variant du côté arrière au côté avant d'une section circulaire à une section globalement triangulaire - avec des coins arrondis lisses - respectivement, et **caractérisée en ce que**
- le boîtier (12) est réalisé en matière plastique, et
- le côté arrière (122) du boîtier comprend un creux (126) autour de la zone d'injection d'eau (123), ledit creux s'étendant à l'intérieur du volume interne du boîtier et ledit creux s'étendant au moins le long d'une partie annulaire entourant le trou (124) de la zone d'injection d'eau.

2. Capsule selon la revendication 1, dans laquelle la matière plastique est un polymère de thermoformage.

3. Capsule selon la revendication 1 ou 2, dans laquelle la matière plastique est une matière plastique à base de polypropylène (PP).

4. Capsule selon l'une quelconque des revendications précédentes, dans laquelle le creux (126) présente la forme d'un anneau entourant le trou (124) de la zone d'injection d'eau.

5. Capsule selon l'une quelconque des revendications 1 à 3, dans laquelle le creux (126) présente la forme d'un cercle comprenant le trou (124) de la zone d'injection d'eau.

6. Capsule selon l'une quelconque des revendications précédentes, dans laquelle :
- le boîtier (12) présente :
une hauteur la plus grande H comprise entre 47,9 et 48,5 mm, et
une largeur la plus grande W comprise entre 36,7 et 37,3 mm, et
une profondeur la plus grande D comprise entre 24,1 et 24,3 mm, et
- la partie annulaire entourant le trou (124) de la zone d'injection d'eau et le long de laquelle s'étend le creux présente un diamètre interne de 10 mm et un diamètre externe de 14 mm.

7. Capsule selon l'une quelconque des revendications précédentes dans laquelle au moins le long de la partie annulaire entourant le trou (124) de la zone d'injection d'eau, la profondeur du creux est d'au moins 0,7 mm.

8. Capsule selon l'une quelconque des revendications précédentes dans laquelle le trou (124) de la zone d'injection d'eau présente un diamètre d'au moins 4 mm, de préférence d'au moins 5 mm, encore plus préférablement d'au moins 6 mm.

9. Capsule selon l'une quelconque des revendications précédentes dans laquelle le boîtier (12) de la capsule est fabriqué par :
- thermoformage du boîtier, puis
- poinçonnage du trou (124) au niveau du côté arrière du boîtier.

10. Système de production d'une boisson comprenant une capsule selon l'une quelconque des revendications précédentes et un module (2) pour la production d'une boisson à partir de la capsule,
- le module (2) comprenant :
un premier élément d'engagement avec la capsule (3), qui peut être déplacé par rapport à un deuxième élément d'engagement avec la capsule (4) en coopération entre une position d'expulsion de la capsule et une position de production d'une boisson,
un moyen (5) pour rétracter activement le premier élément d'engagement avec la capsule (3) depuis la position de production d'une boisson vers la position d'expulsion de la capsule dans laquelle la capsule (1) est expulsée du premier élément d'engagement avec la capsule (3),
- le premier élément d'engagement avec la capsule déplaçable (3) comprenant :
un réceptacle à capsule (31), la forme dudit réceptacle à capsule correspondant à au moins une partie de la forme externe du boîtier (12) de la capsule, et
une aiguille à eau (6) pour entrer dans la capsule à travers le trou (124) au niveau du côté arrière du boîtier de capsule et injecter de l'eau dans la capsule, et
un joint (32) à la base de l'aiguille à eau, ledit joint comprenant au moins une partie annulaire (321), ladite au moins une partie annulaire correspondant au moins à la forme de la partie annulaire du creux entourant le trou de la zone d'injection d'eau de la capsule.

11. Système de production d'une boisson selon la revendication précédente et comprenant une capsule selon la revendication 8, dans lequel :
- la capsule (1) présente une dimension de rebord telle qu'au moins une partie du rebord (125) de la capsule s'étend au-delà d'au moins une partie du premier élément d'engagement avec la capsule (3) une fois qu'elle est engagée dans le premier élément d'engagement avec la capsule, et
- le premier élément d'engagement avec la capsule déplaçable (3) comprend des moyens de maintien configurés pour maintenir la capsule à l'intérieur du réceptacle à capsule (31),
- le module comprend au moins deux moyens (8a, 8b) pour retenir le rebord de la capsule s'étendant au-delà du premier élément d'engagement avec la capsule lorsque ledit premier élément d'engagement avec la capsule (3) est déplacé depuis la position de production d'une boisson vers sa position d'expulsion de la capsule,
dans lequel lesdits moyens de maintien sont des crochets distincts (341, 342) configurés pour s'engager avec le rebord (125) de la capsule, et
dans lequel lesdits deux moyens (8a, 8b) pour retenir le rebord de la capsule sont configurés de sorte que, lors du déplacement du premier élément d'engagement avec la capsule (3) depuis la position de production d'une boisson vers sa position d'expulsion de la capsule, l'un (8b) des deux moyens de retenue s'engage avec le rebord de la capsule avant l'autre moyen de retenue (8a).

12. Système de production d'une boisson selon la revendication précédente, dans lequel :
- un moyen de retenue (8a, 8b) est positionné sur chaque côté latéral de l'axe longitudinal (XX') de déplacement du premier élément d'engagement avec la capsule (3), et
- les positions des deux moyens de retenue le long dudit axe longitudinal de déplacement sont décalées l'une par rapport à l'autre.

13. Système de production d'une boisson selon la revendication précédente, dans lequel les positions des deux moyens de retenue (8a, 8b) le long de l'axe longitudinal du boîtier du module sont décalées l'une par rapport à l'autre d'au moins 1 mm, de préférence d'au plus 5 mm, encore plus préférablement de 3 et 4 mm.

14. Utilisation d'une capsule selon l'une quelconque des revendications 1 à 9 dans un système de production d'une boisson selon l'une quelconque des revendications 10 à 13, dans laquelle :
- l'aiguille à eau (6) pénètre dans le trou (124) compris dans la zone d'injection d'eau au niveau du côté arrière du boîtier de capsule, et
- la partie annulaire (321) du joint à la base de l'aiguille à eau coopère avec le creux (126) entourant le trou de la zone d'injection d'eau de la capsule.

15. Système de production d'une boisson comprenant un module (2) pour la production d'une boisson à partir d'une capsule,
- le module (2) comprenant :
un premier élément d'engagement avec la capsule (3), qui peut être déplacé par rapport à un deuxième élément d'engagement avec la capsule (4) en coopération entre une position d'expulsion de la capsule et une position de production d'une boisson,
un moyen (5) pour rétracter activement le premier élément d'engagement avec la capsule (3) depuis la position de production d'une boisson vers la position d'expulsion de la capsule dans laquelle la capsule (1) est expulsée du premier élément d'engagement avec la capsule (3),
le premier élément d'engagement avec la capsule déplaçable (3) comprenant :
un réceptacle à capsule (31), la forme dudit réceptacle à capsule correspondant à au moins une partie de la forme externe du boîtier (12) de la capsule, et
une aiguille à eau (6) pour entrer dans la capsule à travers le trou (124) au niveau du côté arrière du boîtier de capsule et injecter de l'eau dans la capsule, et
un joint (32) à la base de l'aiguille à eau, ledit joint comprenant au moins une partie annulaire (321), ladite au moins une partie annulaire correspondant au moins à la forme de la partie annulaire du creux entourant le trou de la zone d'injection d'eau de la capsule,
et
- une capsule (1) contenant un ingrédient de boisson (11), tel que des feuilles de thé, configurée pour la préparation d'une boisson, telle que le thé, par injection d'eau chaude dans celle-ci et comprenant :
- un boîtier (12) pour stocker ledit ingrédient de boisson, ledit boîtier comprenant :
un côté ouvert avant (121),
un côté arrière (122) comprenant une zone d'injection d'eau (123), ladite zone d'injection d'eau comprenant un trou (124) dans le boîtier,
un rebord (125) s'étendant depuis le côté ouvert avant, et
- un couvercle avant (13) et/ou une paroi (14) fermant le côté ouvert avant du boîtier, et
- un couvercle arrière (15) fermant le trou (124) de la zone d'injection d'eau, et
- le boîtier (12) présentant une section transversale variant du côté arrière au côté avant d'une section circulaire à une section globalement triangulaire - avec des coins arrondis lisses - respectivement, et
dans lequel :
- le boîtier (12) est réalisé en matière plastique, et
- le côté arrière (122) du boîtier est conçu de sorte qu'il n'est pas pressé contre le joint à la base de l'aiguille à eau lorsque la capsule (1) est logée dans le réceptacle à capsule (31) et que le premier élément d'engagement avec la capsule (3) est dans la position de production de boisson.

16. Boîtier (12) d'une capsule pour contenir un ingrédient de boisson, ledit boîtier comprenant :
- un côté ouvert avant (121),
- un côté arrière (122) comprenant une zone d'injection d'eau (123), ladite zone d'injection d'eau comprenant un trou (124) dans le boîtier,
- un rebord (125) s'étendant depuis le côté ouvert avant, et
- le boîtier (12) présentant une section transversale variant du côté arrière au côté avant d'une section circulaire à une section globalement triangulaire - avec des coins arrondis lisses - respectivement, et
dans lequel :
- le boîtier (12) est réalisé en matière plastique, et
- le côté arrière (122) du boîtier comprend un creux (126) autour de la zone d'injection d'eau (123), ledit creux s'étendant à l'intérieur du volume interne du boîtier et ledit creux s'étendant au moins le long d'une partie annulaire entourant le trou (124) de la zone d'injection d'eau.

17. Boîtier selon la revendication 16 dans lequel un couvercle arrière (15) ferme le trou (124) de la zone d'injection d'eau.
